# EUROPEAN PATENT SPECIFICATION

(11) **EP 1 978 504 B1**
(45) Date of publication and mention of the grant of the patent: **22.04.2015**
(21) Application number: 08250707.0
(22) Date of filing: 29.02.2008
(51) Int. Cl.: G09G 3/32

(54) **Organic light emitting diode (OLED) display and a method of driving the same**
Organische lichtemittierende Diodenanzeige (OLED) und Ansteuerungsverfahren dafür
Dispositif à diode électroluminescente organique (oled) et son procédé de commande

(30) Priority: 06.04.2007 KR 20070034398
(43) Date of publication of application: 08.10.2008
(73) Proprietor: Samsung Display Co., Ltd., Yongin-City, Gyeonggi-Do (KR)
(72) Inventor: Lee, Duk-Jin, Gyeonggi-do (KR); Lee, Jeong-No, Seoul 137-875 (KR)
(74) Representative: Mounteney, Simon James

(56) References cited:
- EP-A1- 0 923 067
- EP-A1- 1 469 449
- WO-A1-03/058590
- JP-A- 2002 215 094
- JP-A- 2004 258 489
- KR-A- 20050 123 325
- US-A1- 2001 028 060
- US-A1- 2006 273 999

## Description

### BACKGROUND OF THE INVENTION

### 1. Field of the Invention

The invention relates to a display apparatus capable of being driven with reduced power consumption, and a method of driving the same.

### 2. Description of the Related Art

Recently, as digital technology continues to grow, various display apparatuses have been developed. In particular, flat panel displays in which a plurality of pixels constitute images, e.g., liquid crystal displays (LCDs), plasma display panels (PDPs), and organic light emitting diode (OLED) displays have been developed.

Among these flat panel displays, particular attention has been paid to OLED displays having advantages such as high brightness, self-emission, a wide viewing angle, and a rapid response speed.

In general, OLED displays emit light in proportion to a driving current supplied to OLEDs of the OLED display from driving transistors. Thus, a desired grayscale may be displayed on the OLED display by adjusting the driving current amount or the duty of the emission duration of the OLEDs.

Meanwhile, various attempts have been made to create high-quality images by driving an OLED display with low power. For example, OLED displays have been developed that may be capable of performing an auto brightness control (ABC) function such that brightness may be automatically adjusted according to an external illuminance. In OLED displays such as these, as the illuminance of external light decreases, brightness is reduced. That is, the reduction of brightness is accomplished by reducing a driving current to thereby prevent a waste of power. The brightness may be adjusted according to an external illuminance by using a driving current reducer.

Generally, as brightness decreases, a driving voltage to reach a current saturation point decreases. Thus, when the illuminance of external light is sensed as being at a low level, and thus brightness of an OLED display may be reduced, a driving current corresponding to the brightness may reach a saturation region at a relatively low driving voltage. However, in conventional OLED displays, a driving voltage may still be provided at a level that may lead to a waste of power.

Accordingly, there remains a need for an OLED display and a method of driving the same that may address one or more of these limitations of the conventional art.

EP 1 469 449 discloses a circuit for generating drive signals from an input image signal. A level adjustment circuit is provided in the circuit for changing a level of a RGB signal before divided to drive the signals for the respective RGB colors based on information obtained by an adjustment information retrieve means.

WO 03/058590 discloses a circuit arrangement for commutating the AC voltage of a plasma display panel, in which the losses and electromagnetic interference which occur as a result of the influence of parasitic resistances and the attendant hard charging and discharge processes are intended to be avoided.

KR 20050123325 discloses an OLED configured to adjust brightness according to an external illuminance. The brightness is adjusted by varying the voltage ELVDD applied to the source of the driving transistor.

### SUMMARY OF THE INVENTION

It is an object of the present invention to provide an OLED display that may be operated with reduced power consumption as compared to the conventional art.

It is another object of the present invention to provide a method of driving an OLED display at a reduced power as compared to the conventional art.

Accordingly, an aspect of the invention provides an OLED display according to claim 1.

The illuminance sensing unit may include a photosensor. The brightness determination unit may be configured to access a first lookup table of brightness values of the OLED display corresponding with an illuminance. Furthermore, the driving voltage determination unit may be configured to access a second lookup table of a driving voltage at a current saturation point of the OLED display corresponding with a brightness of the OLED display.

The voltage conversion unit may include a variable resistance for adjusting the driving voltage and generating the second voltage. The voltage conversion unit may further include a booster converter configured to generate the first voltage, and a buck converter configured to generate the second voltage. The buck converter may include a variable resistance, and the buck converter may be configured to adjust the variable resistance based at least in part on the driving voltage determined by the driving voltage determination unit.

Another aspect of the invention provides a method of driving an organic light emitting diode (OLED) display according to claim 8.

Determining a brightness of the OLED display may further include accessing a first lookup table of brightness values of the OLED display corresponding with an illuminance. Determining a brightness may further include accessing a first graph of brightness values of the OLED display corresponding with an illuminance.

Determining a driving voltage may further include accessing a lookup table of a driving voltage at a current saturation point of the OLED display corresponding with a brightness of the OLED display. Determining a driving voltage may further include accessing a graph of driving voltages of the OLED display corresponding with brightness of the OLED display.

Generating the second voltage may further include adjusting a resistance of a variable resistor in accordance with a control signal corresponding to the determined driving voltage.

### BRIEF DESCRIPTION OF THE DRAWINGS

The above and other features and advantages of the present invention will become more apparent to those of ordinary skill in the art upon making reference to the following description of embodiments of the invention, which is given with reference to the attached drawings, in which:

FIG. 1 is a block diagram of organic light emitting diode (OLED) display circuitry according to an embodiment of the present invention;

FIG. 2 is a graph of a relationship between a driving current and a driving voltage supplied to the OLED display circuitry illustrated in FIG. 1;

FIG. 3 is a graph of a relationship between brightness and a driving voltage of the OLED display circuitry illustrated in FIG. 1;

FIG. 4 is a circuit diagram of a voltage conversion unit that may supply a first voltage to a display unit of the OLED display circuitry illustrated in FIG. 1;

FIG. 5 is a circuit diagram of a voltage conversion unit that may supply a second voltage to the display unit of the OLED display circuitry illustrated in FIG. 1; and

FIG. 6 is a circuit diagram of a unit pixel of an OLED display according to an embodiment of the present invention.

### DETAILED DESCRIPTION OF THE INVENTION

The present invention will now be described more fully hereinafter with reference to the accompanying drawings, in which embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art.

In the accompanying drawings, dimensions may be exaggerated for clarity of illustration. Furthermore, although the terms first, second, etc. may be used herein to describe various elements, these elements should not be limited by these terms. These terms are used to distinguish one element from another. For example, a first element could be termed a second element, and similarly, a second element could be termed a first element, without departing from the scope of the present invention. As used herein, the term "and/or" includes any and all combinations of one or more of the associated listed items.

Additionally, it will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent", etc.).

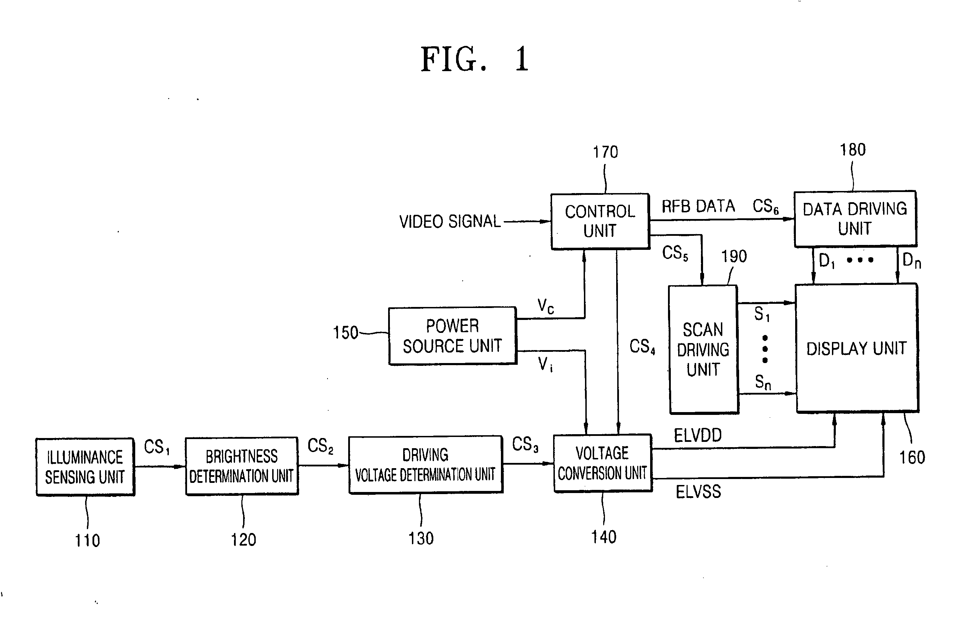

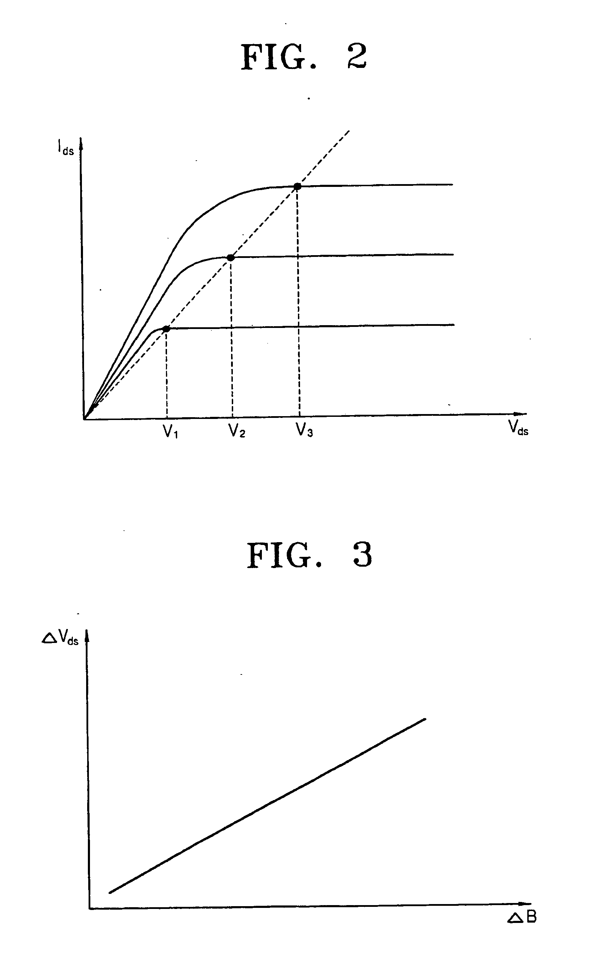

FIG. 1 is a block diagram of circuitry of an organic light emitting diode (OLED) display that may be capable of being operated at a reduced power consumption according to an embodiment of the present invention. A method of driving the OLED display circuitry illustrated in FIG. 1 will also be described in detail later with reference to FIG. 1, Table 1 and FIGS. 2 and 3.

Referring to FIG. 1, the OLED display circuitry includes an illuminance sensing unit 110, a brightness determination unit 120, a driving voltage determination unit 130, a voltage conversion unit 140, and a display unit 160. The illuminance sensing unit 110 includes a photosensor, and may be capable of sensing an external illuminance by converting an external light signal into an electrical signal and measuring the electrical signal.

The brightness determination unit 120 is capable of determining the appropriate brightness of the OLED display that may correspond to the sensed illuminance. The appropriate brightness is indicated by a first control signal CS₁. The brightness determination unit 120 is further capable of storing a first lookup table showing brightness with respect to an external illuminance and/or a first graph illustrating a relationship between brightness with respect to an external illuminance. An external illuminance and brightness that have been previously stored are embodied in a database, and the database is embodied in the first lookup table or the first graph. The first lookup table and/or the first graph are embodied on a storage medium such as a computer-readable storage medium, for example.

Table 1 below illustrates a first lookup table in accordance with the embodiment. In Table 1, if an external illuminance is approximately 500 lux, or approximately an indoor lighting level, the corresponding brightness of a display apparatus according to Table 1 may be approximately 90 cd/m2. Furthermore, if the external illuminance is approximately 60 lux, the brightness of the display apparatus according to Table 1 may be approximately 45 cd/m2. However, it is worthwhile to note that this is just one embodiment, and the present invention is not so limited.

**Table 1**

| Illuminance (lux) | Brightness (cd/m²) |
|---|---|
| 500 | 90 |
| 60 | 45 |

Thus, in this embodiment, if the OLED display is placed under indoor lighting conditions, the illuminance sensing unit 110 may sense an external illuminance of approximately 500 lux, and transmit the first control signal CS₁ corresponding to approximately 500 lux to the brightness determination unit 120. The brightness determination unit 120 then selects approximately 90 cd/m2 as an appropriate brightness of the display apparatus according to the first control signal CS₁ corresponding to approximately 500 lux.

The brightness determination unit 120 transmits a second control signal CS₂ corresponding to the determined brightness to the driving voltage determination unit 130. The driving voltage determination unit 130 receives the second control signal CS₂ and determines a driving voltage at a current saturation point according to the second control signal CS₂.

As brightness decreases, a driving voltage at a current saturation point decreases. Referring to FIG. 2; there is illustrated a relationship between a driving current and a driving voltage with respect to a current saturation point. The driving current and the driving voltage are supplied to an OLED of the OLED display and, as a driving current I_{ds} of a saturation region decreases, a driving voltage V_{ds} at a current saturation point decreases. Thus, as brightness decreases, the driving voltage V_{ds} at a current saturation point decreases.

For example, in an OLED display using V₃ as a maximum driving voltage at maximum brightness, it can be seen from Table 1 above that if an external illuminance is sensed as approximately 500 lux and approximately 60 lux, then brightness values are determined as approximately 90 cd/m² and approximately 45 cd/m², respectively. Accordingly, driving voltages can be determined as V₂ and V₁ according to driving currents corresponding to the brightness values. Thus, in an environment in which an external illuminance is low, it may be desirable to reduce brightness. Accordingly, a driving current is reduced and a driving voltage at a current saturation point is reduced. A driving voltage reduced in such a manner is supplied to the display unit 170, thereby resulting in a reduction in power consumption.

Additionally, based on the abovedescribed relationship between driving current and driving voltage, the driving voltage determination unit 130 stores a second lookup table showing a driving voltage with respect to brightness (not shown) and/or a graph illustrating a relationship between the brightness and the driving voltage, such as illustrated in FIG. 3, and may employ one or more of these in the operation of an OLED display, for example. The second lookup table and/or the second graph may be embodied on a storage medium such as a computer-readable storage medium, for example.

Referring to FIG. 3, a graph of a brightness ΔB with respect to a driving voltage Δ V_{ds} is illustrated. The graph includes a regression line that may be obtained by employing existing data or experimental values, for example. The graph illustrated in FIG. 3 has a slope wherein there is an increase of approximately 0.3V in a driving voltage for approximately every 50 cd/m2 increase in brightness, as just an example.

For example, in an OLED display utilizing a maximum brightness of approximately 150 cd/m² and a maximum driving voltage of approximately 9.5V, if the illuminance sensing unit 110 senses an external illuminance of approximately 500 lux, the brightness determination unit 120 determines brightness as approximately 90 cd/m² according to the sensed external illuminance, and transmits the second control signal CS₂ corresponding to the determined brightness to the driving voltage determination unit 130. The driving voltage determination unit 130 then determines a driving voltage as a voltage which is approximately 0.36V lower than the maximum driving voltage according to the second control signal CS₂. As one example, based on the maximum brightness, an increment ΔB (i.e., approximately -40%) of a brightness determined according to the external illuminance can be determined according to second control signal CS₂. The calculated brightness increment is applied to the graph illustrated in FIG. 3 in order to obtain a driving voltage increment ΔV_{ds}, i.e., approximately -0.36V. That is, the driving voltage is determined as approximately 9.14V which is approximately 0.36V lower than the maximum driving voltage, i.e., approximately 9.5V.

If the illuminance sensing unit 110 senses an external illuminance of approximately 60 lux, the brightness determination unit 120 determines brightness corresponding to the external illuminance to be approximately 45 cd/m². The driving voltage determination unit 130 calculates a brightness increment ΔB based on the determined brightness, and calculates a driving voltage increment ΔV_{ds} according to the brightness increment ΔB. For example, a brightness increment ΔB is calculated as a reduction of approximately 70% based on the maximum brightness. By applying the brightness increment ΔB to the graph illustrated in FIG. 3, a driving voltage increment Δ V_{ds} is determined as approximately -0.63V. Thus, the driving voltage is determined as approximately 8.87V which is 0.63V lower than 9.5V.

Therefore, in the above-described two examples, a reduction in power consumption of about 4% and 7%, respectively, can be accomplished. However, it is worthwhile to note that the scope of the present invention is not limited in this respect.

Furthermore, referring again to FIG. 1, a third control signal CS₃ can be supplied to the voltage conversion unit 140 to control a driving voltage determined by the driving voltage determination unit 130. The driving voltage can be supplied by the driving voltage determination unit 130 to the display unit 160. The voltage conversion unit 140 receives an input voltage Vᵢ from a power source unit 150, e.g., a lithium ion battery, and converts the input voltage Vᵢ into a first voltage ELVDD that is higher than the input voltage Vᵢ and a second voltage ELVSS that is lower than the input voltage Vᵢ. Accordingly, a voltage margin or voltage difference exists between the first voltage ELVDD and the second voltage ELVSS. The first voltage ELVDD and the second voltage ELVSS are supplied to the display unit 160.

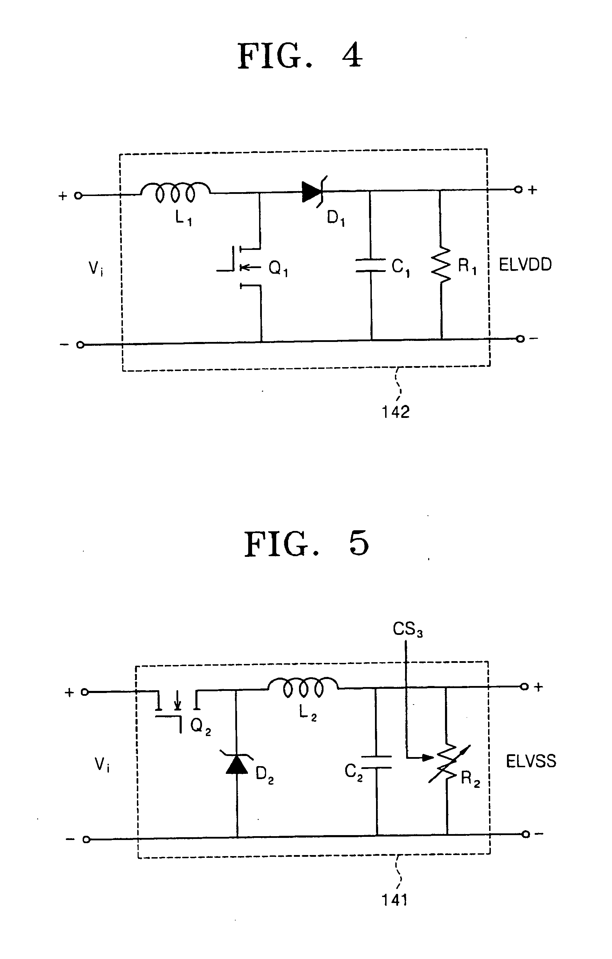

The voltage conversion unit 140 receives the third control signal CS₃ that controls the driving voltage supplied to the display unit 160, and adjusts the second voltage ELVSS according to the third control signal CS₃. In the voltage conversion unit 140, a variable resistance varying in response to the third control signal CS₃ is connected to an output terminal of a circuit determining the second voltage ELVSS. Thus, the second voltage ELVSS is adjusted using the variable resistance. The voltage conversion unit 140 will be described in greater detail with reference to FIGS. 4 and 5, later.

The current embodiment of the present invention illustrates that the voltage conversion unit 140 is capable of adjusting the second voltage ELVSS such that an adjusted driving voltage can be supplied to the display unit 160, but the scope of the present invention is not limited thereto. The second voltage ELVSS can also be adjusted using a lookup table and/or a graph illustrating a relationship between a driving voltage increment, brightness, a brightness increment, and/or a driving voltage with respect to a sensed illuminance, and the second voltage ELVSS.

Furthermore, continuing with FIG. 1, the first voltage ELVDD and the second voltage ELVSS generated in the voltage conversion unit 140 can be supplied to the display unit 160. The display unit 160 includes a plurality of pixels defined by a plurality of data lines D₁ through Dₙ and a plurality of scan lines S₁ through Sₙ. Each pixel includes a driving transistor and an OLED.

The OLED display further includes a data driving unit 180 and a scan driving unit 190. The data driving unit 180 is capable of supplying data voltages corresponding to image data to the pixels. The scan driving unit 190 is capable of selectively supplying selection signals to the pixels to select pixels to be displayed. The data driving unit 180 is further capable of supplying data voltages to the pixels via the data lines D₁ through Dₙ, and the scan driving unit 190 is further capable of selectively supplying selection signals to the pixels via the scan lines S₁ through Sₙ.

The data driving unit 180 receives a sixth control signal CS₆ and image data RGB data from a control unit 170, and the scan driving unit 190 receives a fifth control signal CS₅ from the control unit 170. The control unit 170 generates image data RGB data corresponding to an input image signal video signal, and control signals CS₄, CS₅, and CS₆, e.g., a vertical synchronization signal, a horizontal synchronization signal, and a clock signal. The control unit 170 generates the fourth control signal CS₄ controlling the first voltage ELVDD and the second voltage ELVSS, such that the first voltage ELVDD and the second voltage ELVSS can be stably supplied to the display unit 160 from the voltage conversion unit 140, and can additionally supply the fourth control signal CS₄ to the voltage conversion unit 140. The control unit 170 can receive a predetermined voltage V_{C} from the power source unit 150 and perform the above-described signal processing.

Hereinafter, the voltage conversion unit 140 of the OLED display circuitry illustrated in FIG. 1 will be described in more detail with reference to FIGS. 4 and 5.

FIG. 4 illustrates a circuit diagram of a portion of the voltage conversion unit 140. The voltage conversion unit 140 is capable of supplying the first voltage ELVDD to the display unit 160 of the OLED display illustrated in FIG. 1. FIG. 5 illustrates a circuit diagram of a portion of the voltage conversion unit 140. The voltage conversion unit 140 is capable of supplying the second voltage ELVSS to the display unit 160 of the OLED display illustrated in FIG. 1.

FIG. 4 illustrates a booster converter 142. The booster converter 142 is capable of generating the first voltage ELVDD from the input voltage Vᵢ. The booster converter 142 includes a first inductor L₁, a first switching device Q₁ which is turned on/off in response to the fourth control signal CS₄ supplied from the control unit 170, a first reflux diode D₁, a first capacitor C₁, and a resistance R₁.

If the first switching device Q₁ is turned on in response to the fourth control signal CS₄, energy is accumulated in the first inductor L₁, and charges accumulated in the first capacitor C₁ are discharged and provided as an output. If the first switching device Q₁ is turned off in response to the fourth control signal CS₄, the energy accumulated in the inductor L₁ and the input voltage V₁ are added to a voltage applied to both terminals of the first capacitor C₁, thereby outputting the first voltage ELVDD.

FIG. 5 illustrates a buck converter 141 generating the second voltage ELVSS from the input voltage Vᵢ, but the present invention is not limited thereto. The buck converter 141 includes a second switching device Q₂ which can be turned on/off in response to the fourth control signal CS₄, a second reflux diode D₂, and a low pass filter including a second inductor L₂ and a second capacitor C₂. A variable resistance R₂ is connected to both terminals of the second capacitor C₂, and thus, the buck converter 141 is capable of adjusting the second voltage ELVSS according to the variable resistance R₂.

The third control signal CS₃ controls a driving voltage determined by the driving voltage determination unit 130. The driving voltage determined by the driving voltage determination unit 130 can then be supplied to the display unit 160. The variable resistance R₂ adjusts the second voltage ELVSS according to the driving voltage.

If the second switching device Q₂ is turned on in response to the fourth control signal CS₄, the input voltage Vᵢ is output through the low pass filter. If the second switching device Q₂ is turned off in response to the fourth control signal CS₄, energy accumulated in the second inductor L₂ is discharged through the second reflux diode D₂ and output. At this time, the second voltage ELVSS is adjusted by the variable resistance R₂. Variable resistance R₂ varies in response to the third control signal CS₃. The third control signal CS₃ controls the driving voltage determined by the driving voltage determination unit 130.

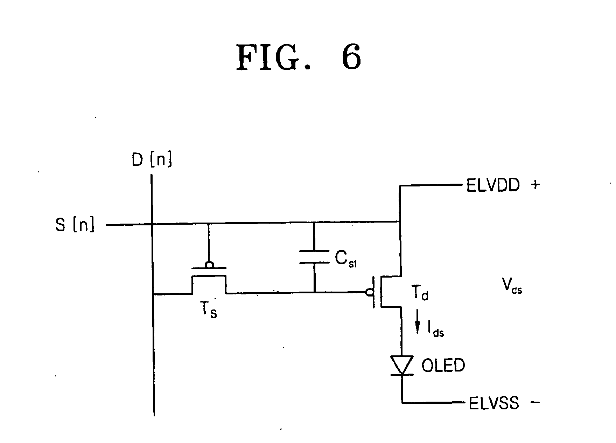

The first voltage ELVDD and the second voltage ELVSS are applied to driving transistors and OLEDs of the display unit 160. A detailed description thereof will be provided hereinafter with reference to FIG. 6.

Illustrated in FIG. 6 is a unit pixel of an OLED display. The unit pixel is capable of receiving a first voltage and a second voltage, but the present invention is not limited thereto.

In FIG. 6, a unit pixel is defined by a scan line S[n] and a data line D[n]. The scan line S[n] is connected to a gate electrode of a switch transistor T_{S}, a first electrode of the switch transistor T_{S} is connected to the data line D[n], and a second electrode of the switch transistor T_{S} is connected to a first terminal of a capacitor Cₛₜ and a gate electrode of a driving transistor T_{d}.

A first voltage ELVDD is applied to a first terminal of the driving transistor T_{d} and a second terminal of the capacitor Cₛₜ. A second terminal of the driving transistor T_{d} is connected to an anode of an OLED, and a second voltage ELVSS is applied to a cathode of the OLED.

In the current embodiment of the present invention, the second voltage ELVSS is adjusted to supply a driving voltage V_{ds} determined by a driving voltage determination unit (element 130 of FIG. 1) to a display unit (element 160 of FIG. 1). The adjusted second voltage ELVSS is supplied to the cathode of the OLED.

The OLED receives a driving current I_{ds}. The driving current I_{ds} is determined by a data voltage supplied from the gate electrode of the driving transistor T_{d}. The OLED further receives the first voltage ELVDD applied to a first electrode of the driving transistor T_{d}, and emits light. In this example, the driving current I_{ds} determines brightness.

If the first voltage ELVDD is adjusted to supply a driving voltage determined according to a sensed illuminance to the display unit, the driving current I_{ds} and the brightness are changed. Thus, in order to correct the changed brightness to a desired brightness, a driving procedure, e.g., an adjustment of a data voltage, is performed. In one embodiment, the second voltage ELVSS is adjusted to correct the changed brightness rather than adjusting the first voltage ELVDD, so that the voltage adjustment does not affect the driving current I_{ds}.

As described above, in an OLED display and a method of driving the same in accordance with the present invention, based on the characteristics of a driving voltage at a current saturation point which varies according to brightness, a driving voltage may be determined so as to maintain a driving voltage margin, for example. That is, the brightness of an OLED display can be determined to vary according to an external illuminance, and a driving voltage at a current saturation point can be determined according to the variable brightness, and thereby constantly maintain a driving voltage margin. A reduction in power consumption of the OLED display can therefore be realized.

In addition, according the present invention, a voltage applied to a cathode of an OLED can be adjusted so as to supply a determined driving voltage to a display unit. The voltage supplied to the cathode of an OLED can be adjusted without affecting a driving current supplied to the OLED. Adjusting a determined driving voltage without affecting a driving current supplied to an OLED can make operation of an OLED display easier.

Embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. An organic light emitting diode (OLED) display, comprising:
an illuminance sensing unit (110) configured to sense an external illuminance;
a driving voltage determination unit (130);
a brightness determination unit (120) configured to determine a brightness of the OLED display according to an illuminance sensed by the illuminance sensing unit (110) and to generate a first control signal (CS2) supplied to the driving voltage determination unit (130);
a voltage conversion unit (140);
a display unit (160) configured to receive a first voltage (ELVDD) and a second voltage (ELVSS) from the voltage conversion unit (140) and display an image; wherein the display unit (160) includes a plurality of pixels, each pixel having: a driving transistor (Td) having a gate electrode and a first electrode, the gate electrode configured to receive a data voltage (D(n)) and the first electrode configured to receive the first voltage (ELVDD) and an OLED having an anode connected to a second electrode of the driving transistor (Td) and a cathode configured to receive the second voltage (ELVSS);
the driving voltage determination unit (130) configured to generate a second control signal (CS3) supplied to the voltage conversion unit (140) to determine a driving voltage (Vds) corresponding with a current saturation point of the OLED display, the driving voltage (Vds) being determined based at least in part on a driving current (Ids) and the brightness determined by the brightness determination unit (120);
**characterised in that** the voltage conversion unit (140) is configured to receive an input voltage (Vi), generate the first voltage (ELVDD) higher than the input voltage (Vi), and generate the second voltage (ELVSS) lower than the input voltage (Vi), and wherein only the second voltage (ELVSS) is adjusted by said second control signal (CS3) generated by the driving voltage determination unit (130) to control the driving voltage (Vds) of the display unit (160).

2. An OLED display as claimed in claim 1, wherein the illuminance sensing unit comprises a photosensor.

3. An OLED display as claimed in claim 1 or 2, wherein the brightness determination unit (120) is configured to access a first lookup table of brightness values of the OLED display corresponding with an illuminance.

4. An OLED display as claimed in any preceding claim, wherein the driving voltage determination unit (130) is configured to access a second lookup table of a driving voltage at a current saturation point of the OLED display corresponding with a brightness of the OLED display.

5. An OLED display as claimed in any one of claims 1 to 4, wherein the voltage conversion unit (140) comprises:
a booster converter configured to generate the first voltage; and
a buck converter configured to generate the second voltage.

6. An OLED display as claimed in claim 5, wherein the buck converter includes a variable resistance and is configured to adjust the variable resistance based at least in part on the driving voltage determined by the driving voltage determination unit.

7. An OLED display as claimed in any preceding claim, wherein the voltage conversion unit (140) includes a variable resistance for adjusting the driving voltage and generating the second voltage.

8. A method of driving an organic light emitting diode (OLED) display, the method comprising:
sensing an external illuminance (110);
determining a brightness of the OLED display (120) according to the sensed illuminance;
determining a driving voltage (Vds) at a current saturation point for the OLED display based at least in part on a driving current (Ids) corresponding to the determined brightness;
receiving an input voltage (Vi) from an input voltage source (150);
generating a first voltage (ELVDD) higher than the input voltage (Vi) and a second voltage (ELVSS) lower than the input voltage (Vi) and only adjusting the second voltage (ELVSS) based on the determining step of the driving voltage of the display unit (160); and
providing the first voltage (ELVDD) and the second voltage (ELVSS) to a display unit (160) to display an image on the display unit (160), wherein the display unit (160) comprises a plurality of pixels, each pixel having:
a driving transistor (Td) having a gate electrode receiving a data voltage (D(n)); and
an OLED having an anode and a cathode,
wherein providing the first voltage (ELVDD) and the second voltage (ELVSS) to the OLED display unit further includes supplying the first voltage (ELVDD) to the first electrode of the driving transistor (Td), and supplying the second voltage (ELVSS) to a cathode of the OLED.

9. A method as claimed in claim 8, wherein determining a brightness of the OLED display further includes accessing a first lookup table of brightness values of the OLED display corresponding with an illuminance.

10. A method as claimed in claim 9, wherein determining a brightness of the OLED display further includes accessing a first graph of brightness values of the OLED display corresponding with an illuminance.

11. A method as claimed in claim 8, 9 or 10, wherein determining a driving voltage includes accessing a lookup table of a driving voltage at a current saturation point of the OLED display corresponding with a brightness of the OLED display.

12. A method as claimed in claim 11, wherein determining a driving voltage further includes accessing a graph of driving voltages of the OLED display corresponding with brightness of the OLED display.

13. A method as claimed in one of claims 8 to 12, wherein the generation of the second voltage includes adjusting a resistance of a variable resistor in accordance with a control signal corresponding to the determined driving voltage.

## Patentansprüche

1. Organische Leuchtdioden-(OLED-)Anzeige, umfassend:
eine Illuminanzerfassungseinheit (110), die dafür konfiguriert ist, eine externe Illuminanz zu erfassen;
eine Treiberspannungsbestimmungseinheit (130);
eine Helligkeitsbestimmungseinheit (120), die dafür konfiguriert ist, eine Helligkeit der OLED-Anzeige gemäß einer durch die Illuminanzerfassungseinheit (110) erfassten Illuminanz zu bestimmen und ein erstes Steuersignal (CS2) zu erzeugen, das an die Treiberspannungsbestimmungseinheit (130) geliefert wird;
eine Spannungsumsetzungseinheit (140);
eine Anzeigeeinheit (160), die dafür konfiguriert ist, eine erste Spannung (ELVDD) und eine zweite Spannung (ELVSS) von der Spannungsumsetzungseinheit (140) zu empfangen und ein Bild anzuzeigen; wobei die Anzeigeeinheit (160) eine Vielzahl von Pixeln aufweist, wobei jedes Pixel aufweist: einen Treibertransistor (Td) mit einer Gate-Elektrode und einer ersten Elektrode, wobei die Gate-Elektrode dafür konfiguriert ist, eine Datenspannung (D(n)) zu empfangen, und die erste Elektrode dafür konfiguriert ist, die erste Spannung (ELVDD) zu empfangen, und eine OLED mit einer Anode, die mit einer zweiten Elektrode des Treibertransistors (Td) verbunden ist, und einer Kathode, die dafür konfiguriert ist, die zweite Spannung (ELVSS) zu empfangen;
wobei die Treiberspannungsbestimmungseinheit (130) dafür konfiguriert ist, ein zweites Steuersignal (CS3) zu erzeugen, das an die Spannungsumsetzungseinheit (140) geliefert wird, um eine Treiberspannung (Vds) entsprechend einem Stromsättigungspunkt der OLED-Anzeige zu bestimmen, wobei die Treiberspannung (Vds) zumindest teilweise auf der Grundlage eines Treiberstroms (Ids) und der durch die Helligkeitsbestimmungseinheit (120) bestimmten Helligkeit bestimmt wird;
**dadurch gekennzeichnet, dass** die Spannungsumsetzungseinheit (140) dafür konfiguriert ist, eine Eingangsspannung (Vi) zu empfangen, die erste Spannung (ELVDD) höher als die Eingangsspannung (Vi) zu erzeugen und die zweite Spannung (ELVSS) niedriger als die Eingangsspannung (Vi) zu erzeugen, und wobei nur die zweite Spannung (ELVSS) durch das durch die Treiberspannungsbestimmungseinheit (130) erzeugte zweite Steuersignal (CS3) angepasst wird, um die Treiberspannung (Vds) der Anzeigeeinheit (160) zu steuern.

2. OLED-Anzeige nach Anspruch 1, wobei die Illuminanzerfassungseinheit einen Fotosensor umfasst.

3. OLED-Anzeige nach Anspruch 1 oder 2, wobei die Helligkeitsbestimmungseinheit (120) dafür konfiguriert ist, auf eine erste Verweistabelle von Helligkeitswerten der OLED-Anzeige entsprechend einer Illuminanz zuzugreifen.

4. OLED-Anzeige nach einem der vorhergehenden Ansprüche, wobei die Treiberspannungsbestimmungseinheit (130) dafür konfiguriert ist, auf eine zweite Verweistabelle einer Treiberspannung bei einem Stromsättigungspunkt der OLED entsprechend einer Helligkeit der OLED-Anzeige zuzugreifen.

5. OLED-Anzeige nach einem der Ansprüche 1 bis 4, wobei die Spannungsumsetzungseinheit (140) umfasst:
einen Booster-Konverter (Aufwärtswandler), der dafür konfiguriert ist, die erste Spannung zu erzeugen; und
einen Buck-Konverter (Abwärtswandler), der dafür konfiguriert ist, die zweite Spannung zu erzeugen.

6. OLED-Anzeige nach Anspruch 5, wobei der Buck-Konverter einen Regelwiderstand umfasst und dafür konfiguriert ist, den Regelwiderstand zumindest teilweise auf Grundlage der durch die Treiberspannungsbestimmungseinheit bestimmten Treiberspannung anzupassen.

7. OLED-Anzeige nach einem der vorhergehenden Ansprüche, wobei die Spannungsumsetzungseinheit (140) einen Regelwiderstand zum Anpassen der Treiberspannung und zum Erzeugen der zweiten Spannung aufweist.

8. Verfahren zur Ansteuerung einer organischen Leuchtdioden-(OLED-)Anzeige, wobei das Verfahren umfasst:
Erfassen einer externen Illuminanz (110);
Bestimmen einer Helligkeit der OLED-Anzeige (120) gemäß der erfassten Illuminanz;
Bestimmen einer Treiberspannung (Vds) bei einem Stromsättigungspunkt für die OLED-Anzeige zumindest teilweise auf der Grundlage eines Treiberstroms (Ids) entsprechend der bestimmten Helligkeit;
Empfangen einer Eingangsspannung (Vi) von einer Eingangsspannungsquelle (150);
Erzeugen einer ersten Spannung (ELVDD) höher als die Eingangsspannung (Vi) und einer zweiten Spannung (ELVSS) niedriger als die Eingangsspannung (Vi) und lediglich Anpassen der zweiten Spannung (ELVSS) auf der Grundlage des Bestimmungsschritts der Treiberspannung der Anzeigeeinheit (160); und
Anlegen der ersten Spannung (ELVDD) und der zweiten Spannung (ELVSS) an eine Anzeigeeinheit (160), um ein Bild auf der Anzeigeeinheit (160) anzuzeigen, wobei die Anzeigeeinheit (160) eine Vielzahl von Pixeln umfasst, wobei jedes Pixel aufweist:
einen Treibertransistor (Td) mit einer Gate-Elektrode, die eine Datenspannung (D(n)) empfängt; und
eine OLED mit einer Anode und einer Kathode,
wobei das Anlegen der ersten Spannung (ELVDD) und der zweiten Spannung (ELVSS) an die OLED-Anzeigeeinheit ferner umfasst: Liefern der ersten Spannung (ELVDD) an die erste Elektrode des Treibertransistors (Td) und Liefern der zweiten Spannung (ELVSS) an eine Kathode der OLED.

9. Verfahren nach Anspruch 8, wobei das Bestimmen einer Helligkeit der OLED-Anzeige ferner umfasst: Zugreifen auf eine erste Verweistabelle von Helligkeitswerten der OLED-Anzeige entsprechend einer Illuminanz.

10. Verfahren nach Anspruch 9, wobei das Bestimmen einer Helligkeit der OLED-Anzeige ferner umfasst: Zugreifen auf ein erstes Diagramm von Helligkeitswerten der OLED-Anzeige entsprechend einer Illuminanz.

11. Verfahren nach Anspruch 8, 9 oder 10, wobei das Bestimmen einer Treiberspannung umfasst: Zugreifen auf eine Verweistabelle einer Treiberspannung bei einem Stromsättigungspunkt der OLED-Anzeige entsprechend einer Helligkeit der OLED-Anzeige.

12. Verfahren nach Anspruch 11, wobei das Bestimmen einer Treiberspannung ferner umfasst: Zugreifen auf ein Diagramm von Treiberspannungen der OLED-Anzeige entsprechend einer Helligkeit der OLED-Anzeige.

13. Verfahren nach einem der Ansprüche 8 bis 12, wobei die Erzeugung der zweiten Spannung umfasst: Anpassen eines Widerstandswertes eines Regelwiderstands gemäß einem Steuersignal entsprechend der bestimmten Treiberspannung.

## Revendications

1. Affichage à diode électroluminescente organique (OLED) comprenant :
une unité de détection de niveau d'éclairement (110) configurée pour détecter un niveau d'éclairement externe ;
une unité de détermination de tension d'attaque (130) ;
une unité de détermination de luminosité (120) configurée pour déterminer une luminosité de l'affichage OLED en fonction d'un niveau d'éclairement détecté par l'unité de détection de niveau d'éclairement (110) et pour générer un premier signal de commande (CS2) fourni à l'unité de détermination de tension d'attaque (130) ;
une unité de conversion de tension (140) ;
une unité d'affichage (160) configurée pour recevoir une première tension (ELVDD) et une seconde tension (ELVSS) en provenance de l'unité de conversion de tension (140) et afficher une image ; dans lequel l'unité d'affichage (160) comprend une pluralité de pixels, chaque pixel présentant : un transistor d'attaque (Td) présentant une électrode de grille et une première électrode, l'électrode de grille étant configurée pour recevoir une tension de données (D(n)) et la première électrode étant configurée pour recevoir la première tension (ELVDD) et une OLED présentant une anode raccordée à une seconde électrode du transistor d'attaque (Td) et une cathode configurée pour recevoir la seconde tension (ELVSS) ;
l'unité de détermination de tension d'attaque (130) étant configurée pour générer un second signal de commande (CS3) fourni à l'unité de conversion de tension (140) afin de déterminer une tension d'attaque (Vds) correspondant à un point de saturation de courant de l'affichage OLED, la tension d'attaque (Vds) étant déterminée en se basant au moins en partie sur un courant d'attaque (Ids) et la luminosité déterminée par l'unité de détermination de luminosité (120) ;
**caractérisé en ce que** l'unité de conversion de tension (140) est configurée pour recevoir une tension d'entrée (Vi), générer la première tension (ELVDD) supérieure à la tension d'entrée (Vi), et générer la seconde tension (ELVSS) inférieure à la tension d'entrée (Vi), et dans lequel seule la seconde tension (ELVSS) est ajustée grâce audit second signal de commande (CS3) généré par l'unité de détermination de tension d'attaque (130) afin de commander la tension d'attaque (Vds) de l'unité d'affichage (160).

2. Affichage OLED selon la revendication 1, dans lequel l'unité de détection de niveau d'éclairement comprend un photocapteur.

3. Affichage OLED selon la revendication 1 ou 2, dans lequel l'unité de détermination de luminosité (120) est configurée pour accéder à un premier tableau de consultation de valeurs de luminosité de l'affichage OLED correspondant à un niveau d'éclairement.

4. Affichage OLED selon l'une quelconque des revendications précédentes, dans lequel l'unité de détermination de tension d'attaque (130) est configurée pour accéder à un second tableau de consultation d'une tension d'attaque pour un point de saturation de courant de l'affichage OLED correspondant à une luminosité de l'affichage OLED.

5. Affichage OLED selon l'une quelconque des revendications 1 à 4, dans lequel l'unité de conversion de tension (140) comprend :
un convertisseur survolteur configuré pour générer la première tension ; et
un convertisseur dévolteur configuré pour générer la seconde tension.

6. Affichage OLED selon la revendication 5, dans lequel le convertisseur dévolteur comprend une résistance variable et est configuré pour ajuster la résistance variable en se basant au moins en partie sur la tension d'attaque déterminée par l'unité de détermination de tension d'attaque.

7. Affichage OLED selon l'une quelconque des revendications précédentes, dans lequel l'unité de conversion de tension (140) comprend une résistance variable permettant d'ajuster la tension d'attaque et de générer la seconde tension.

8. Procédé d'attaque d'un affichage à diode électroluminescente organique (OLED), le procédé comprenant les étapes consistant à :
détecter un niveau d'éclairement externe (110) ;
déterminer une luminosité de l'affichage OLED (120) en fonction du niveau d'éclairement détecté ;
déterminer une tension d'attaque (Vds) pour un point de saturation de courant de l'affichage OLED en se basant au moins en partie sur un courant d'attaque (Ids) correspondant à la luminosité déterminée ;
recevoir une tension d'entrée (Vi) en provenance d'une source de tension d'entrée (150) ;
générer une première tension (ELVDD) supérieure à la tension d'entrée (Vi) et une seconde tension (ELVSS) inférieure à la tension d'entrée (Vi) et ajuster seulement la seconde tension (ELVSS) en se basant sur l'étape de détermination de la tension d'attaque de l'unité d'affichage (160) ; et
fournir la première tension (ELVDD) et la seconde tension (ELVSS) à une unité d'affichage (160) afin d'afficher une image sur l'unité d'affichage (160), dans lequel l'unité d'affichage (160) comprend une pluralité de pixels, chaque pixel présentant :
un transistor d'attaque (Td) présentant une électrode de grille recevant une tension de données (D(n)) ; et
une OLED présentant une anode et une cathode,
dans lequel l'étape de fourniture de la première tension (ELVDD) et de la seconde tension (ELVSS) à l'unité d'affichage OLED comprend en outre une étape consistant à fournir la première tension (ELVDD) à la première électrode du transistor d'attaque (Td), et fournir la seconde tension (ELVSS) à une cathode de l'OLED.

9. Procédé selon la revendication 8, dans lequel l'étape de détermination d'une luminosité de l'affichage OLED comprend en outre une étape consistant à accéder à un premier tableau de consultation de valeurs de luminosité de l'affichage OLED correspondant à un niveau d'éclairement.

10. Procédé selon la revendication 9, dans lequel l'étape de détermination d'une luminosité de l'affichage OLED comprend en outre une étape consistant à accéder à un premier graphique de valeurs de luminosité de l'affichage OLED correspondant à un niveau d'éclairement.

11. Procédé selon l'une quelconque des revendications 8, 9 ou 10, dans lequel l'étape de détermination d'une tension d'attaque comprend une étape consistant à accéder à un tableau de consultation d'une tension d'attaque pour un point de saturation de courant de l'affichage OLED correspondant à une luminosité de l'affichage OLED.

12. Procédé selon la revendication 11, dans lequel l'étape de détermination d'une tension d'attaque comprend en outre une étape consistant à accéder à un graphique de tensions d'attaque de l'affichage OLED correspondant à une luminosité de l'affichage OLED.

13. Procédé selon l'une quelconque des revendications 8 à 12, dans lequel l'étape de génération de la seconde tension comprend une étape consistant à ajuster une résistance d'une résistance variable en fonction d'un signal de commande correspondant à la tension d'attaque déterminée.
